# EUROPÄISCHE PATENTSCHRIFT

(11) **EP 1 978 084 B1**
(45) Veröffentlichungstag und Bekanntmachung des Hinweises auf die Patenterteilung: **05.08.2009**
(21) Anmeldenummer: 07006716.0
(22) Anmeldetag: 30.03.2007
(51) Int. Cl.: C12H 1/04, C12H 1/06, B01J 20/10

(54) **Verfahren zum Filtern von Bier**
Method for filtering beer
Procédé de filtrage de bière

(43) Veröffentlichungstag der Anmeldung: 08.10.2008
(73) Patentinhaber: Krones Aktiengesellschaft, 93073 Neutraubling (DE)
(72) Erfinder: Schneid, Ralf, 85354 Freising (DE)
(74) Vertreter: Grünecker, Kinkeldey, Stockmair & Schwanhäusser Anwaltssozietät

(56) Entgegenhaltungen:
- WO-A-91/19780
- DE-A1- 4 327 678
- DE-B- 1 160 812
- DE-C- 682 788
- GB-A- 586 996
- US-A- 2 316 241
- US-A- 5 801 051

## Beschreibung

Die vorliegende Erfindung betrifft ein Verfahren zum Filtern von Bier, wobei herzustellendes Bier als Unfiltrat in einen Filter geleitet wird.

Aus der WO 91/19780 A ist ein Bierfilterverfahren bekann, bei dem Diatomerde dem Bier zugesetzt und dieses geschüttelt wird.

Aus der DE 11 60 812 B ist bekannt, dem Bier zur Filtration Kieselgel zuzusetzen und dieses zu schütteln.

Die Druckschriften zeigen ein Schütteln des herzustellenden Biers jedoch keinen Rüttelprozess bei dem das herzustellende Bier in einen Behälter eingebracht wird, in dem mit Hilfe eines Vibrationselementes mechanisch Wellen erzeugt werden.
Die DE 4327678 zeigt ein Verfahren zur Aufbereitung von Kieselgur.

Bei der Bierherstellung werden durch Filtration Hefezellen und andere Feststoffe bzw. Inhaltsstoffe abgeschieden, um eine vorgegebene Haltbarkeit des Bieres zu garantieren und keine nachträgliche Trübung zu verursachen. Bislang wird Bier hauptsächlich über Anschwemmfilter, z. B. mit Hilfe von Filterkerzen gefiltert. Bei derartigen Anschwemmfiltem wird bislang hauptsächlich Kieselgur als Filterhilfsmittel verwendet. Aufgrund der Toxizität von Kieselgur sowie der Entsorgungsproblematik, wird versucht, den Kieselgureinsatz zu minimieren oder aber Alternativen für diese Technik zu finden. Eine Alternative bieten beispielsweise Membranfilter, die jedoch nur eine geringere Filterkapazität aufweisen und zudem sehr schnell zusetzen.

Hiervon ausgehend liegt der vorliegenden Erfindung die Aufgabe zugrunde, ein verbessertes Verfahren zum Filtern von Bier bereitzustellen, das ein schnelles Zusetzen eines Filters verhindert und bei Anschwemmfiltem die notwendige Menge an Filterhilfsmittel reduzieren kann.

Erfindungsgemäß wird diese Aufgabe durch die Merkmale des Anspruchs 1 gelöst.

Dadurch, dass das herzustellende Bier vor dem Einleiten in den Filter dem Rüttelprozess ausgesetzt wird, wird beispielsweise der Anteil von Polysachariden und Proteinen, wie Betaglucan reduziert, was sich bei der Filtration günstig auswirkt. Durch den Rüttelprozess wird dadurch insbesondere der Druckanstieg zwischen Filtereinlauf und Filterauslauf reduziert, was bedeutet, dass der Filter nicht so schnell zusetzt und somit nicht so häufig gereinigt und wieder mit Filterhilfsmittel angeschwemmt werde muss. Bei Anschwemmfiltern kann die Menge an benötigten Filterhilfsmitteln wesentlich reduziert werden. Unter "herzustellendes Bier" soll im Rahmen dieser Anmeldung sowohl das bereits vergorene Bier oder aber auch Biervorläufer wie etwa die Würze verstanden werden.

Das erfindungsgemäße Verfahren ermöglicht darüber hinaus einen hohen Durchfluss oder eine höhere Gesamtfiltrationsmenge durch den Filter.

Gemäß der Erfindung wird bei dem Rüttelprozess das herzustellende Bier in einen Behälter eingebracht, in dem mit Hilfe eines Vibrationselementes Vibrationen erzeugt werden können. Dabei kann das Vibrationselement beispielsweise mechanisch rüttelnd hin und her bewegt werden oder elektromechanisch verformt werden, damit in der Flüssigkeit Vibrationen erzeugt werden.

Vorzugsweise wird die Vibrationsfrequenz f(t) des Vibrationselementes in einem Bereich zwischen einer unteren Frequenz fₘᵢₙ und einer oberen Frequenz fₘₐₓ moduliert.

Es hat sich gezeigt, dass, wenn die Frequenz zwischen einem unteren und einem oberen Frequenzwert moduliert wird, das Verfahren besonders effektiv durchgeführt werden kann und die Filterleistung besonders groß ist. Vorzugsweise wird die Vibrationsfrequenz f(t) sinusförmig moduliert.

Die Vibrationsfrequenz f(t) kann mit einer Phasendauer in einem Bereich von 0,1 bis 5 Minuten und vorzugsweise 1 bis 3 Minuten moduliert werden. Eine solche Anregung des herzustellende Biers hat sich als besonders vorteilhaft herausgestellt.

Der Frequenzbereich liegt dabei vorzugsweise in einem Gesamtbereich zwischen 30 und 220 Hz. Gerade in diesem niedrigen Frequenzbereich hat sich überraschenderweise eine verbesserte Filtration herausgestellt. Gemäß einem bevorzugten Ausführungsbeispiel liegt dabei die untere Frequenz bei 90 Hz und die obere Frequenz bei 120 Hz. Die Differenz zwischen der oberen und unteren Frequenz beträgt dabei vorzugsweise 10 bis 50 Hz.

Gemäß einem bevorzugten Ausführungsbeispiel wird das Unfiltrat durch einen Anschwemmfilter, vorzugsweise Kerzenfilter oder einem Membranfilter, filtriert. Solche Filter eignen sich insbesondere für die Filtration von Bier zur Bierklärung, und ermöglichen, dass Teilchen in einem Bereich von 10⁻¹ bis 10⁻² µm ausgefiltert werden können, sodass auch Hefen mit einer Teilchengröße von etwa 5 bis 10 µm zuverlässig ausgefiltert werden können.

Gemäß einer bevorzugten Ausführungsform wird als Unfiltrat Bier nach dem Gär- und Lagerprozess zur Bierklärung gefiltert.

Vorzugsweise wird das ungefilterte Bier bereits während des Sudhausprozesses, d. h. bei der Herstellung der Würze vor dem Gärprozess dem Rüttelprozess ausgesetzt oder aber auch nach dem Sudhausprozess , d.h. nach oder gegebenenfalls während dem Gär- und Lagerprozess.

Das herzustellende Bier wird vorzugsweise über mindestens zwei , vorzugsweise drei oder vier Vibrationselemente angeregt, was sich als besonders vorteilhaft herausgestellt hat.

Die vorliegende Erfindung wird nachfolgend unter Bezugnahme der folgenden Zeichnungen näher erläutert.
- Fig. 1: zeigt schematisch einen Aufbau einer Filtervorrichtung zum Durchführen des erfindungsgemäßen Verfahrens.
- Fig. 2: zeigt schematisch den Verlauf der modulierten Vibrationsfrequenz f(t).
- Fig. 3: zeigt den möglichen Gesamtfrequenzbereich A, in dem der Frequenzbereich B liegen kann.
- Fig. 4: zeigt die Filterparameter einer Vergleichsmessung zwischen einer Filtration mit und ohne Rüttelprozess.

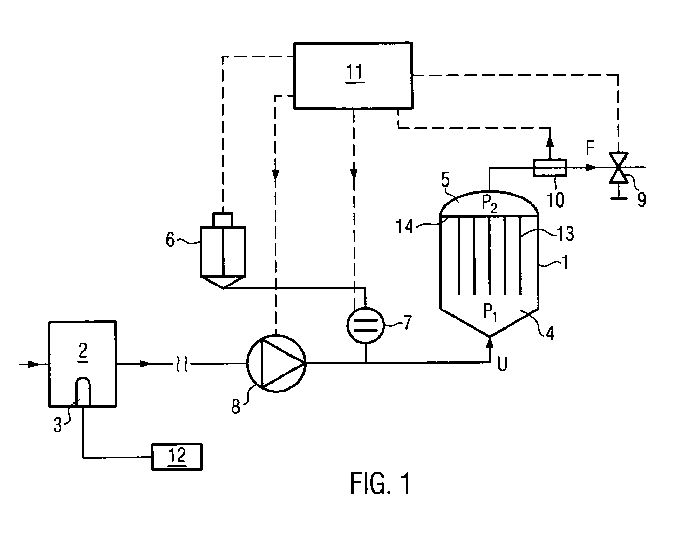

Fig. 1 zeigt eine mögliche Vorrichtung zur Durchführung des erfindungsgemäßen Verfahrens, wobei hier das Verfahren im Zusammenhang mit einem Kerzenfilter 1 beschrieben wird. Die vorliegende Erfindung ist aber nicht auf die Verwendung eines Kerzenfilters beschränkt, sondern eignet sich ebenso gut für die Verwendung eines anderen Mikrofilters, wie beispielsweise eines Membranfilters.

Wie aus Fig. 1 hervorgeht, weist der Kerzenfilter 1 in bekannter Weise mehrere senkrecht im Unfiltratraum 4 angeordnete Filterkerzen auf, die hier beispielsweise an einer Trennplatte 14 angeordnet sind, wobei sich oberhalb des Unfiltratraums 4 und der Trennplatte 14 der Filtratraum 5 befindet. Bei der Filtration in einem Kerzenfilter wird Filterhilfsmittel an die Oberflächen der hohlen Filterkerzen 13 angeschwemmt, wobei das Unfiltrat durch die Anschwemmschicht und die Filterkerzen tritt, durch die Filterkerzen 13 in den Unfiltratraum 5 geleitet wird und von dort als Filtrat F den Filter verlässt. Zur Filtration bei Anschwemmfiltern muss mit Hilfe einer Dosiereinrichtung 6 und einer Dosierpumpe 7 eine geeignete Menge an Filterhilfsmittel, beispielsweise Kieselgur, zudosiert werden. Die Anordnung umfasst weiter eine Unfiltratpumpe 8 zum Einpumpen des Unfiltrats in den Filterkessel. Weiter umfasst die Vorrichtung ein Stellventil 9 zum Einstellen des Durchflusses des Filtrats F sowie hier optional einen Durchflussmesser 10 zum Messen des Durchflusses des Filtrats. Die Vorrichtung schließt eine Systemsteuerung 11 ein, die hier beispielsweise mit der Unfiltratpumpe 8, der Dosiereinrichtung 6, der Dosierpumpe 7, dem Stellventil 9 und dem Durchflussmesser 10 verbunden ist. Bei der Bierherstellung kann nach dem Sudhausprozess, in dem in bekannter Weise die Würze hergestellt wird, und nach der Gärung, eine Mikrofiltration erfolgen, so dass im Bier enthaltene Hefezellen und andere Feststoffe entfernt werden können. Derartige Stoffe können herausgefiltert werden, damit sie das Bier nicht trüben. Da die Hefe eine Teilchengröße von etwa 5 bis 10 µm aufweist, ist es nötig, die oben genannten Mikrofilter zu verwenden.

Gemäß der vorliegenden Erfindung ist nun vor dem Filter 1 ein Behälter 2 vorgesehen, in dem mit Hilfe eines Vibrationselementes 3 mechanisch Wellen erzeugt werden können. In diesem Beispiel ist nun das Vibrationselement 3 als Vibrationsstab ausgebildet, der am unteren Ende innerhalb des Behälters 2 angeordnet ist. Es können selbstverständlich auch mehrere Vibrationselemente vorgesehen sein. Diese können auch an anderen Stellen im Behälter angeordnet sein. Wesentlich ist nur, dass das herzustellende Bier, d. h. das spätere Unfiltrat, über das Vibrationselement in Schwingung versetzt wird. Dabei kann sich das Vibrationselement 3 z.B. rüttelnd hin und her bewegen, (wie beispielsweise bei einem Betonmischer). Das Vibrationselement 3 kann jedoch auch elektromechanisch verformbar sein. Durch das Vibrationselement 3 breiten sich Vibrationen in dem Behälter 2 aus. Es ist auch möglich, dass das Vibrationselement von außen gegen den Behälter stößt. Das Vibrationselement 3 kann über eine Steuereinheit 12 angesteuert werden, die die Leistung des Vibrationselementes sowie den Frequenzverlauf steuert.

Nachfolgend wird das erfindungsgemäße Verfahren unter Bezugnahme der Figuren 1 bis 3 näher erläutert.

Das herzustellende Bier wird zunächst vor der Filtration in den Behälter 2 geleitet, der das oben genannte Vibrationselement 3 umfasst. Der Behälter 2 hat beispielsweise ein Fassungsvermögen von 50 hl bis 1000 hl. In dem Behälter 2 wird das herzustellende Bier einem Rüttelprozess ausgesetzt. Der Rüttelprozess kann beispielsweise während des Sudhausprozesses zur Herstellung der Würze, d. h. also noch vor der Gärung, erfolgen. Dabei wird das herzustellende Bier bzw. die Würze durch das Vibrationselement 3 in Schwingung versetzt. Der Rüttelprozess dauert etwa 5 bis 60 Minuten. Die Leistung des Vibrationselementes 3 liegt in einem Bereich von 0.1 bis 3 KW.

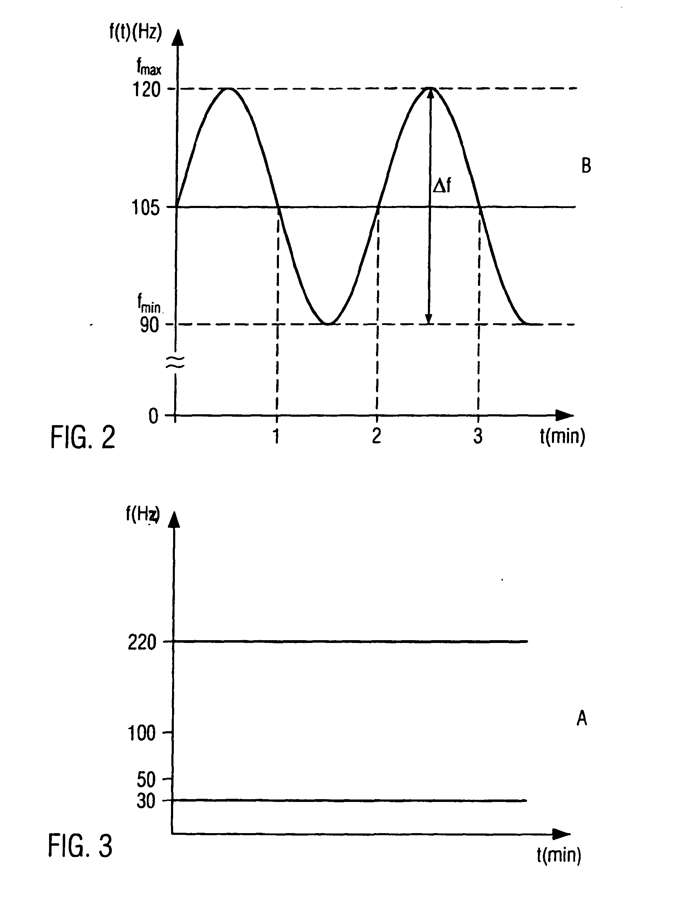

Es hat sich herausgestellt, dass die Frequenz f(t) in einem niederfrequenten Bereich liegen sollte, beispielsweise in einem Bereich zwischen 30 und 220 Hz, wie aus Fig. 3 hervorgeht. Es hat sich weiter gezeigt, dass es besonders vorteilhaft ist, wenn die Vibrationsfrequenz f (t) des Vibrationselementes 3 in einem Frequenzbereich B zwischen einer unteren Frequenz fₘᵢₙ und einer oberen Frequenz fₘₐₓ moduliert wird, wie dies beispielsweise aus Fig. 2 ersichtlich ist. In Fig. 2 wird die Frequenz in einem Bereich von etwa 90 Hz bis 120 Hz sinusförmig mit einer Phasendauer von 2 Minuten moduliert. Die Differenz zwischen Δf zwischen fₘᵢₙ und fₘₐₓ liegt hier bei 30 Hz. Eine solche Anregung hat sich als besonders vorteilhaft herausgestellt und begünstigt unerwarteterweise scheinbar die Reduzierung von Proteinen und Polysachariden. Selbstverständlich ist der Vibrationsfrequenzverlauf nicht auf das in Fig. 2 gezeigte konkrete Ausführungsbeispiel beschränkt. Die Phasendauer kann beispielsweise in einem Bereich von 0,1 bis 5 Minuten, vorzugsweise in einem Bereich von 1 bis 3 Minuten liegen. Der Frequenzbereich B (in dem sich die Frequenz in Abhängigkeit der Zeit verändert), zwischen der unteren Frequenz fₘᵢₙ und der oberen Frequenz fₘₐₓ, kann innerhalb des in Fig. 3 gezeigten Gesamtbereichs A zwischen 30 und 220 Hz liegen, wobei Δf zwischen 10 und 50 Hz betragen kann.

Die Anregung kann entweder kontinuierlich oder aber auch intermittierend erfolgen.

Nach dem Rüttelprozess wird das herzustellende Bier aus dem Behälter 2 geleitet und dann gegebenenfalls noch nachfolgenden Vorrichtungen zur Würzeherstellung zugeführt, wonach das herzustellende Bier, sprich die Würze, vergoren wird.

Nach dem Gärprozess wird dann das herzustellende Bier, sprich das Unfiltrat U, über die Pumpe 8 in den Filter 1 gepumpt, wobei in bekannter Weise unter Zuführung von Filterhilfsmittel, z. B. Kieselgur, das Unfiltrat U, d. h. das herzustellende Bier, gefiltert wird. Der Rüttelprozess könnte jedoch auch unmittelbar vor der Filtration, d. h. nach der Gärung und Lagerung oder währenddessen stattfinden.

Dadurch, dass das Unfiltrat, d. h. das herzustellende Bier, vor der Filtration einem Rüttelprozess ausgesetzt wurde, ergeben sich bei der Filtration wesentliche Vorteile. Beispielsweise steigt der Druck zwischen Filtrat und Unfiltratseite, ΔP = P1 - P2, nicht so stark an, wie im Stand der Technik, so dass eine bessere Filterleistung sprich eine längere Filtrationszeit realisiert werden kann. Der Filter setzt insgesamt weniger schnell zu, so dass die Häufigkeit der Filterreinigung reduziert werden kann. Ferner muss weniger Kieselgur, d. h. Filterhilfsmittel, zugesetzt werden. Insbesondere im Hinblick auf die Toxizität und Entsorgungsproblematik von Kieselgur, ist dies besonders vorteilhaft. Auch wenn anstelle des Kerzenfilters 1 ein anderer Mikrofilter, wie beispielsweise ein Membranfilter, verwendet wird, bei dem keine Zudosierung von Filterhilfsmittel notwendig ist, ergibt sich der Vorteil, dass der Membranfilter nicht so schnell zusetzt. Das transmembrane Druckgefälle kann somit wesentlich reduziert werden.

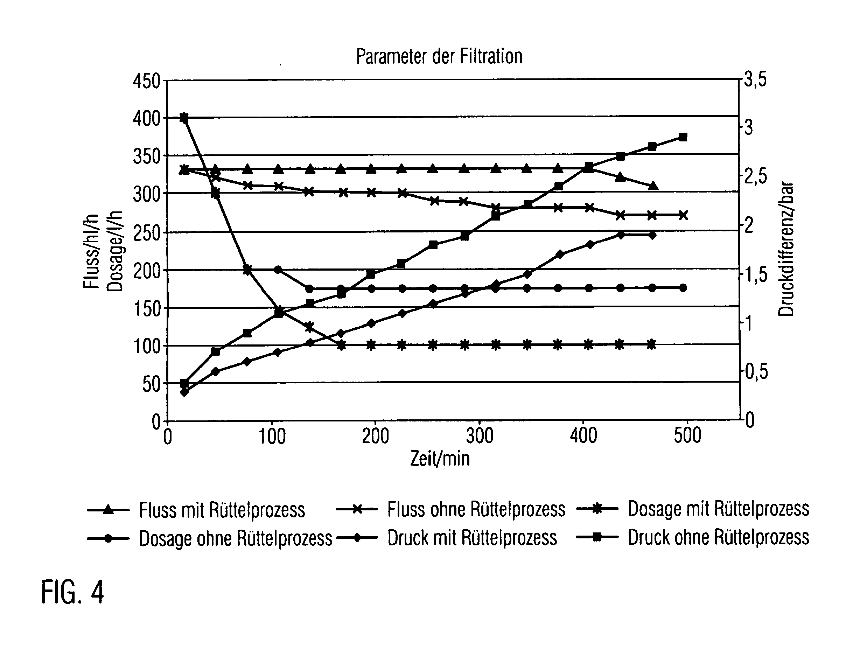

Im Zusammenhang mit Fig. 4 wird eine Filtration gemäß der vorliegenden Erfindung, bei dem das Unfiltrat bei seiner Herstellung einem Rüttelprozess ausgesetzt wurde, mit einem herkömmlichen Filterverfahren verglichen.

Die Vergleichsfilterversuche wurden mit Bieren aus einer Malzcharge durchgeführt. Ein Gärtank wurde mit einem Standardsud befüllt, der keinem Rüttelprozess ausgesetzt wurde. Ein weiterer Gärtank wurde mit einem Sud befüllt, der während des Sudhausprozesses gerüttelt und in Schwingung versetzt wurde. Die Frequenz modulierte sinusförmig zwischen 90 und 120 Hz innerhalb mit einer Phasendauer von 2 Minuten, wie in Zusammenhang mit Fig. 2 näher erläutert wurde.

Zur Filtration wurde ein Standardkerzenfilter der Firma Steinecker Typ Twinflow verwendet. Zur Untersuchung des Einflusses der Vibration auf den Filtrationsprozess wurden jeweils identische Voraussetzungen am Filter geschaffen. Der Filter wurde für den Standardsud und für den Sud, der gemäß der Erfindung einem Rüttelprozess ausgesetzt wurde, mit der gleichen Kieselgurmischung frisch angeschwemmt. Das Prozessleitsystem 11 regelte als Hauptgröße den Fluss des Filtrats am Filterauslauf. Die Menge Kieselgur zur Dosage wurde als Sollwert im Prozessleitsystem hinterlegt und ist veränderbar.

Fig. 4 zeigt die entsprechenden Parameter der Filtration. Die Ergebnisse sind äußerst überraschend. Bei den Suden mit Rüttelprozess kann das Prozessleitsystem 11 den Fluss nahezu bis zum Ende der Filtration bei einem hohen Durchfluss von beispielsweise 330 hl/h halten. Der Fluss des Standardsudes ohne Rüttelprozess bricht bereits nach wenigen Minuten ein und fällt kontinuierlich bis zum Ende des Prozesses. Die Kieselgurdosage des Kieselgurgemisches ist bei dem erfindungsgemäßen Sud der gerüttelt wurde deutlich niedriger. Der Anstieg der Druckdifferenz am Filter beim Standardsud ohne Rüttelprozess verlief wesentlich steiler. Hier wurde am Ende der Filtration eine Differenz von 2,9 bar verzeichnet. Bei dem Sud der erfindungsgemäß gerüttelt wurde, betrug die Druckdifferenz am Filter lediglich 1,9 bar.

Die Filtrierbarkeit des Bieres hat sich durch den Einsatz des Vibrationselementes 3 erheblich verbessert.

In der nachfolgenden Tabelle ist der Kieselgurverbrauch für einen normalen Filtrationsprozess und einen erfindungsgemäßen Filtrationsprozess dargestellt

**Tabelle 1**

| | **Standardsud ohne Rüttelprozess** | **Sud mit Rüttelprozess** |
|---|---|---|
| Filtrierte Menge (hl) | 2940 | 2964 |
| Dosiermittel zudosiert über 7,5 Std (l) | 1600 | 1137,5 |
| Kieselgurverbrauch gesamt (kg) | 430 * | 350* |
| Kieselgurverbrauch pro hl Filtrat (g/hl) | 146 | 118 |

| | | |
|---|---|---|
| * mit 90 kg Voranschwemmung | | |

Wie aus der Tabelle hervorgeht, konnte bei diiesem Versuch der Kieselgurverbrauch durch das erfindungsgemäße Verfahren bei etwa gleicher filtrierter Menge von 430 auf 350 kg reduziert werden, was einer Einsparung von etwa 20 % Kieselgur entspricht. Das heißt, dass der Kieselgurverbrauch pro hl Filtrat von 146 g/hl auf 118 g/hl reduziert werden kann.

## Patentansprüche

1. Verfahren zum Filtern von Bier, wobei das herzustellende Bier als Unfiltrat (U) in einen Filter (1) geleitet wird, wobei
das herzustellende Bier vor dem Einleiten in den Filter (1) einem Rüttelprozess ausgesetzt wird, und
beim Rüttelprozess das herzustellende Bier in einen Behälter (2) eingebracht wird, in dem mit Hilfe eines Vibrationselementes (3) mechanisch Wellen erzeugt werden.

2. Verfahren nach Anspruch 1, **dadurch gekennzeichnet, dass** die Vibrationsfrequenz f(t) des Vibrationselementes (3) in einen Frequenzbereich (B) zwischen einer unteren Frequenz fₘᵢₙ und einer oberen Frequenz fₘₐₓ moduliert wird.

3. Verfahren nach Anspruch 2, **dadurch gekennzeichnet, dass** die Vibrationsfrequenz f(t) sinusförmig moduliert wird.

4. Verfahren nach einem der Ansprüche 2 oder 3, **dadurch gekennzeichnet, dass** die Vibrationsfrequenz f(t) mit einer Phasendauer in einem Bereich von 0,1 bis 5 Minuten vorzugsweise1 bis 3 Minuten moduliert wird.

5. Verfahren nach einem der Ansprüche 2 bis 4, **dadurch gekennzeichnet, dass** der Frequenzbereich (B) innerhalb eines Gesamtfrequenzbereiches (A) von 30 bis 220 Hz liegt.

6. Verfahren nach mindestens einem der Ansprüche 2 bis 5, **dadurch gekennzeichnet, dass** die untere Frequenz bei 90 Hz liegt und die obere Frequenz bei 120 Hz liegt.

7. Verfahren nach mindestens einem der Ansprüche 2 bis 6, **dadurch gekennzeichnet, dass** die Differenz zwischen oberer und unterer Frequenz fₘₐₓ - fₘᵢₙ zwischen 10 und 50 Hz beträgt.

8. Verfahren nach mindestens einem der Ansprüche 1 bis 7, **dadurch gekennzeichnet, dass** das Unfiltrat durch einen Anschwemmfilter (1), vorzugsweise Kerzenfilter oder einem Membranfilter filtriert wird.

9. Verfahren nach mindestens einem der Ansprüche 1 bis 8, **dadurch gekennzeichnet, dass** als Unfiltrat Bier nach dem Gärprozess zur Bierklärung gefiltert wird.

10. Verfahren nach Anspruch 9, **dadurch gekennzeichnet, dass** das ungefilterte Bier während des Sudhausprozesses vor dem Gärprozess oder nach dem Sudhausprozess dem Rüttelprozess ausgesetzt wird.

11. Verfahren nach mindestens einem der Ansprüche 1 bis 8 **dadurch gekennzeichnet, dass** das herzustellende Bier mit mindestens zwei , vorzugsweise drei oder vier Vibrationselementen gerüttelt wird.

## Claims

1. Method for filtering beer, wherein the beer to be produced is routed as an unfiltered substance (U) to a filter (1), wherein
the beer to be produced is subjected to a shaking process before being introduced into the filter (1), and
the shaking process involves the beer to be produced being put into a container (2) in which a vibrating element (3) is used to mechanically produce waves.

2. Method according to Claim 1, **characterized in that** the frequency of vibration f(t) of the vibrating element (3) is modulated to a frequency range (B) between a lower frequency fₘᵢₙ and an upper frequency fₘₐₓ.

3. Method according to Claim 2, **characterized in that** the frequency of vibration f(t) is modulated sinusoidally.

4. Method according to one of Claims 2 and 3,
**characterized in that** the frequency of vibration f(t) is modulated with a phase duration in a range from 0.1 to 5 minutes, preferably 1 to 3 minutes.

5. Method according to one of Claims 2 to 4,
**characterized in that** the frequency range (B) is within an overall frequency range (A) from 30 to 220 Hz.

6. Method according to at least one of Claims 2 to 5, **characterized in that** the lower frequency is 90 Hz and the upper frequency is 120 Hz.

7. Method according to at least one of Claims 2 to 6, **characterized in that** the difference between the upper and lower frequencies fₘₐₓ - fₘᵢₙ is between 10 and 50 Hz.

8. Method according to at least one of Claims 1 to 7, **characterized in that** the unfiltered substance is filtered by an alluvial filter (1), preferably a candle filter or a membrane filter.

9. Method according to at least one of Claims 1 to 8, **characterized in that** the unfiltered substance filtered is beer following the fermentation process for the purpose of beer clarification.

10. Method according to Claim 9, **characterized in that** the unfiltered beer is subjected to the shaking process during the brewing house process before the fermentation process or after the brewing house process.

11. Method according to at least one of Claims 1 to 8, **characterized in that** the beer to be produced is shaken using at least two, preferably 3 or 4, vibrating elements.

## Revendications

1. Procédé pour filtrer la bière, la bière à fabriquer étant guidée sous la forme d'une matière non filtrée (U) dans un filtre (1), dans lequel
la bière à fabriquer est soumise, avant son introduction dans le filtre (1), à un processus conférant des secousses ; et
au cours du processus conférant des secousses, la bière à fabriquer est introduite dans un récipient (2) dans lequel, à l'aide d'un élément vibrant (3), on génère des ondulations par voie mécanique.

2. Procédé selon la revendication 1, **caractérisé en ce que** la fréquence de vibration f(t) de l'élément vibrant (3) est modulée dans une plage de fréquences (B) entre une fréquence inférieure fₘᵢₙ et une fréquence supérieure fₘₐₓ.

3. Procédé selon la revendication 2, **caractérisé en ce que** la fréquence de vibration f(t) est soumise à une modulation sinusoïdale.

4. Procédé selon l'une quelconque des revendications 2 ou 3, **caractérisé en ce que** la fréquence de vibration f(t) est soumise à une modulation avec une durée de phase dans la plage de 0,1 à 5 minutes, de préférence de 1 à 3 minutes.

5. Procédé selon l'une quelconque des revendications 2 à 4, **caractérisé en ce que** la plage de fréquences (B) se situe au sein d'une plage de fréquences totale (A) de 30 à 220 Hz.

6. Procédé selon au moins une des revendications 2 à 5, **caractérisé en ce que** la fréquence inférieure se situe à 90 Hz et la fréquence supérieure se situe à 120 Hz.

7. Procédé selon au moins une des revendications 2 à 6, **caractérisé en ce que** la différence entre la fréquence supérieure et la fréquence inférieure fₘₐₓ - fₘᵢₙ se situe entre 10 et 50 Hz.

8. Procédé selon au moins une des revendications 1 à 7, **caractérisé en ce que** la matière non filtrée et filtrée à travers un filtre à alluvionnage continu (1), de préférence à travers un filtre en forme de bougie ou à travers un filtre à membrane.

9. Procédé selon au moins une des revendications 1 à 8, **caractérisé en ce que** la bière sous la forme d'une matière non filtrée est filtrée après le processus de fermentation pour obtenir une clarification de la bière.

10. Procédé selon la revendication 9, **caractérisé en ce que** la bière non filtrée est soumise, au cours du processus de brassage, avant le processus de fermentation ou après le processus de brassage, au processus conférant des secousses.

11. Procédé selon au moins une des revendications 1 à 8, **caractérisé en ce que** la bière à fabriquer est soumise à des secousses avec au moins deux éléments vibrants, de préférence avec trois ou quatre éléments vibrants.
